(19) Europäisches Patentamt
European Patent Office
Office européen des brevets

(11) EP 0 965 413 B1

(12) **EUROPÄISCHE PATENTSCHRIFT**

(45) Veröffentlichungstag und Bekanntmachung des Hinweises auf die Patenterteilung:
**07.05.2003 Patentblatt 2003/19**

(51) Int Cl.⁷: **B23Q 7/14**, B23P 21/00

(21) Anmeldenummer: **99106606.9**

(22) Anmeldetag: **31.03.1999**

(54) **Anlage für die Durchführung einer Folge aus mehreren Montage- und/oder Bearbeitungsvorgängen an Werkstücken, insbesondere Kleinteilen**

Installation for carrying out a series of assembly and/or working operations on workpieces, in particular on small components

Installation pour l'exécution d'une série d'opérations de montage et/ou de travail de pièces, en particulier de petites pièces

(84) Benannte Vertragsstaaten:
**AT BE CH DE DK ES FR GB IT LI NL SE**

(30) Priorität: **17.06.1998 DE 19826627**

(43) Veröffentlichungstag der Anmeldung:
**22.12.1999 Patentblatt 1999/51**

(73) Patentinhaber: **SIM Automation GmbH & Co KG
37308 Heiligenstadt (DE)**

(72) Erfinder:
• **Der Erfinder hat auf seine Nennung verzichtet.**

(74) Vertreter: **Albrecht, Rainer Harald, Dr.-Ing. et al
Patentanwälte
Andrejewski, Honke & Sozien,
Theaterplatz 3
45127 Essen (DE)**

(56) Entgegenhaltungen:
**DE-A- 2 009 586          DE-A- 2 643 725**

**Beschreibung**

Die Erfindung betrifft eine Anlage für die Durchführung einer Folge aus mehreren Montage- und/oder Bearbeitungsvorgängen an Werkstücken, insbesondere Kleinteilen, die auf Werkstückträgern aufgesetzt sind, mit mindestens zwei in einer Fertigungslinie hintereinander angeordneten Arbeitsstationen mit Montage- und/oder Bearbeitungseinrichtungen, wobei die Arbeitsstationen jeweils einen Antrieb für getaktete, zwangsgesteuerte Bewegungen der einer Arbeitsstation zugeordneten Montage/Bearbeitungseinrichtungen und jeweils eine lineare Transfervorrichtung für den schrittweisen, an den Arbeitstakt der Montage/Bearbeitungseinrichtungen angepaßten Transport der Werkstückträger aufweisen. Anlagen der beschriebenen Art werden zur Montage und Fertigbearbeitung von Baugruppen aus mehreren vorgefertigten Teilen, z. B. Elektrosteckern, Kupplungen mit einliegenden Dichtungen, Autozubehörteilen u. dgl. eingesetzt.

Arbeitsstationen mit Montage- und/oder Bearbeitungseinrichtungen, einem Antrieb für getaktete, zwangsgesteuerte Bewegungen dieser Einrichtungen und einer linearen Transfervorrichtung für den schrittweisen, an den Arbeitstakt der Montage/Bearbeitungseinrichtungen angepaßten Transport der Werkstückträger mit aufsitzendem Werkstück sind aus DE-A 43 20 501 und DE-A 196 03 253 bekannt. Alle Montage/Bearbeitungseinrichtungen einer Arbeitsstation arbeiten in einem vorgegebenen, für alle Einrichtungen gleichen Arbeitstakt, unabhängig davon, ob schnelle Arbeitsvorgänge, z. B. Stanzungen, Herstellung von Steckverbindungen u. dgl., oder langsame Arbeitsvorgänge, z. B. Kleb- oder Lötverbindungen, ausgeführt werden. Um die Durchsatzleistung insgesamt zu steigern, können Montageund/oder Bearbeitungseinrichtungen für die Ausführung langsamer Arbeitsvorgänge, parallel geschaltet werden. Dies führt zu komplexen Anordnungen aus hintereinander und parallel geschalteten Arbeitsstationen mit Einrichtungen für das Aufteilen und Zusammenführen der Materialströme. Die für die Aufteilung und Zusammenführung der Materialströme erforderlichen Einrichtungen stören den Materialfluß und limitieren im Ergebnis den Durchsatz der Anlage.

Der Erfindung liegt die Aufgabe zugrunde, eine Anlage der eingangs beschriebenen Art anzugeben, mit der bei hoher Durchsatzleistung in einer Fertigungslinie schnelle und langsame Arbeitsvorgänge hintereinander ausgeführt werden können, ohne daß eine Verzweigung und Zusammenführung von Materialströmen erforderlich ist.

Zur Lösung dieser Aufgabe lehrt die Erfindung,

daß die Montage/Bearbeitungseinrichtungen für schnelle Arbeitsvorgänge einer ersten Arbeitsstation I zugeordnet sind und in einem schnellen Vorgabetakt mit hoher Vorgabetaktzahl $N_V$ pro Zeiteinheit arbeiten,

daß die Montage/Bearbeitungseinrichtungen für langsamere Arbeitsvorgänge einer zweiten Arbeitsstation II zugeordnet sind und in einem Arbeitstakt arbeiten, dessen Arbeitstaktzahl $N_A$ pro Zeiteinheit um ein ganzzahliges Vielfaches i kleiner ist als die Vorgabetaktzahl $N_V$,

daß in der zweiten Arbeitsstation II für dieselben Arbeitsvorgänge jeweils mehrere Montage/Bearbeitungseinrichtungen $MII_1 ... MII_i$ in Längsrichtung der Transfervorrichtung hintereinander angeordnet sind, deren Anzahl $n_{II}$ dem Quotienten i aus der Vorgabetaktzahl $N_V$ und der Arbeitstaktzahl $N_A$ für die in der zweiten Arbeitsstation ausgeführten langsameren Arbeitsvorgänge entspricht, und

daß die der zweiten Arbeitsstation II zugeordnete Transfervorrichtung eine dem Quotient aus der Vorgabetaktzahl $N_V$ und der Arbeitstaktzahl $N_A$ entsprechende Zahl vorpositionierter Werkstückträger erfaßt und der entsprechenden Anzahl $n_{II}$ von Montage/Bearbeitungseinrichtungen $MII_1...MII_i$ zuführt, mit denen gleichzeitig derselbe Arbeitsvorgang an den zugeführten Werkstücken ausführbar ist.

Es versteht sich, daß weitere Arbeitsstationen verzweigungsfrei in einer Fertigungslinie angeschlossen werden können, die entsprechend der zweiten Arbeitsstation ausgeführt sind und deren Betrieb in der beschriebenen Weise an den Vorgabetakt der ersten Arbeitsstation angepaßt ist. Die Erfindung beruht auf der Erkenntnis, daß schnelle und langsame Arbeitsvorgänge in hintereinander geschalteten Arbeitsstationen ohne Einschränkung der Durchsatzleistung ausgeführt werden können, wenn für sämtliche Arbeitsstationen der Anlage das Produkt aus Arbeitstaktzahl und Zahl der Montage/Bearbeitungseinrichtungen, in denen dieselben Arbeitsvorgänge ausgeführt werden, eine konstante und für alle Arbeitsstationen gleiche Größe darstellen. Die Transfervorrichtung wird in Kombination hiermit so betrieben, daß der nach dem beschriebenen Kriterium festgelegten Zahl $n_{II}$ von Montage/Bearbeitungseinrichtungen $MII_1...MII_i$, die für die Ausführung identischer Arbeitsvorgänge vorgesehen sind, in einem einzigen Arbeitstakt Werkstückträger gleichzeitig oder annähernd gleichzeitig zugeführt werden. Die Positionierung kann dadurch erfolgen, daß mit Beginn eines Arbeitstaktes zwei oder gegebenenfalls mehrere, gleichlange Transportschritte ausgeführt werden, wobei die Werkstückträger mit kurzem zeitlichen Abstand den Montage/Bearbeitungseinrichtungen $MII_1$, $MII_2...MII_i$ vorgestellt werden. Sobald die Werkstückträger an den Montage/Bearbeitungseinrichtungen, in denen derselbe Arbeitsvorgang ausgeführt werden muß, positioniert sind, werden die für den Arbeitsvorgang erforderlichen Stellbewegungen der Montage/Bearbeitungseinrichtungen ausgeführt. Gemäß einer bevorzugten Ausführung weist die Transfervorrichtung der zweiten Arbeitsstation II eine Zuführeinrichtung für Werkstückträger auf, auf der die Werkstückträger mit einem an den Abstand zwischen den einzelnen Montage/Bearbeitungseinrichtungen angepaßten Zwischenraum vorpositionierbar sind. Bei dieser Ausführung der Erfindung sind mehrere Werkstückträger gleichzeitig von der Transfervorrichtung erfaßbar und mit einem einzigen Schritt einer zugeordneten Anzahl $n_{II}$ von Montage/Bearbeitungseinrichtungen zuführbar.

Die Transfervorrichtungen müssen so ausgeführt sein, daß Werkstückträger mit bereits aufsitzendem Werkstück eingeschleust und nach Durchlauf der Arbeitsstation an eine Zuführeinrichtung der nächstfolgenden Arbeitsstation abgegeben werden können. Das Einschleusen muß in jeder Arbeitsstation so erfolgen, daß die eingeschleusten Werkstückträger zu einem durch den Arbeitstakt definierten Zeitpunkt exakt an den Montage/Bearbeitungseinrichtungen positioniert sind. Die zulässigen Toleranzen sind klein. Die nachfolgend beschriebenen Transfervorrichtungen erfüllen diese Anforderungen. Die im Rahmen der erfindungsgemäßen Lehre bevorzugten Transfervorrichtungen weisen jeweils eine Zuführeinrichtung für Werkstückträger und einen intermittierend angetriebenen Riementrieb mit mindestens einem Zahnriemen auf, der außenseitig mit einem an ein bodenseitiges Zahnprofil des Werkstückträgers angepaßtes Kupplungsprofil ausgebildet ist. Ein Kupplungsabschnitt des Riementriebs ist heb- und senkbar angeordnet, wobei der Kupplungsabschnitt bei der Hubbewegung in das bodenseitige Profil mindestens eines auf der Zuführeinrichtung vorpositionierten Werkstückträgers kuppelnd eingreift. Zweckmäßig ist der Kupplungsabschnitt der zur zweiten Arbeitsstation gehörenden Transfervorrichtung so bemessen, daß mit einer einzigen Hubbewegung eine dem Quotient i aus der Vorgabetaktzahl $N_V$ und der Arbeitstaktzahl $N_A$ entsprechende Zahl von auf der Zuführeinrichtung vorpositionierten Werkstückträgern erfaßbar ist.

Gemäß einer bevorzugten Ausführung der Erfindung weisen die Transfervorrichtungen Führungsleisten auf, an denen die von dem Riementrieb erfaßten Werkstückträger seitlich geführt sind, wobei eine Führungsleiste als Präzisionsanschlag mit einer im Rahmen der Bearbeitungstoleranzen präzise vorgegebenen Zuordnung zur Montage- und Bearbeitungseinrichtung ausgebildet ist. Ferner ist eine Spanneinrichtung mit Spannelement vorgesehen, welches die Werkstückträger in der Arbeitsposition seitlich beaufschlagt und an dem Präzisionsanschlag fixiert. Zweckmäßig sind das Spannelement und Werkstückträger mit einander zugeordneten Zentrierungsflächen ausgebildet. Die Zentrierung einerseits zwischen Spannelement und Werkstückträger und andererseits zwischen dem Präzisionsanschlag und einer komplementären Anschlagfläche des Werkstückträgers ermöglicht präzise Bearbeitungen und Montagevorgänge an dem auf dem Werkstückträger aufsitzenden Werkstück.

Gemäß einer bevorzugten Ausführung weist der Riementrieb der Transfervorrichtungen zwei parallel angeordnete Zahnriemen für die Transportbewegung der Werkstückträger und einen synchron zu diesen bewegbaren Kupplungszahnriemen auf, wobei der Kupplungszahnriemen zwischen den parallelen Zahnriemen angeordnet ist und eine vertikale Kupplungsbewegung ausführt. Die parallel angeordneten, für eine horizontale Transportbewegung der Werkstückträger vorgesehenen Zahnriemen und der Kupplungszahnriemen sind mechanisch miteinander gekuppelt, so daß eine synchrone Bewegung sichergestellt ist.

In weiterer Ausgestaltung lehrt die Erfindung, daß der Riementrieb ein Antriebsrad sowie mindestens zwei Umlenkräder aufweist, wobei die parallelen Zahnriemen für den Transport der Werkstückträger über das Antriebsrad und gemeinsam mit dem Kupplungszahnriemen über ein Umlenkrad geführt sind. Der Kupplungszahnriemen ist über die beiden Umlenkräder geführt. Zweckmäßig ist eine weitere Ausgestaltung dergestalt, daß der Kupplungszahnriemen im Obertrum und im Untertrum des Riementriebs über einen Schuh geführt ist, der an eine die vertikale Kupplungsbewegung ausführende Stelleinrichtung angeschlossen ist. Es versteht sich, daß die Kupplungszahnriemenlänge des über die ortsfest gelagerten Umlenkräder geführten Kupplungszahnriemens so bemessen ist, daß der Schuh die erforderlichen Stellbewegungen ausführen kann. Ausreichend ist eine Stellbewegung im Bereich von weniger als 10 mm bis einigen Zentimetern. Die beschriebene Ausführung zeichnet sich dadurch aus, daß bei den Stellbewegungen nur geringe Massen bewegt werden müssen. Eine andere, von der Lehre der Erfindung ebenfalls umfaßte Ausführung sieht vor, daß das den Kupplungszahnriemen umlenkende Rad an eine die vertikale Kupplungsbewegung ausführende Stelleinrichtung angeschlossen ist.

Im folgenden wird die Erfindung anhand einer lediglich ein Ausführungsbeispiel darstellenden Zeichnung erläutert. Es zeigen schematisch:

Fig. 1 die Seitenansicht einer erfindungsgemäßen Anlage für" die Durchführung einer Folge aus mehreren Montage- und/oder Bearbeitungsvorgängen an Werkstücken,

Fig. 2 eine lineare Transfervorrichtung der in Fig. 1 dargestellten Anlage,

Fig. 3 eine Draufsicht der in Fig. 2 dargestellten Transfervorrichtung,

Fig. 4 den Schnitt A-A aus Fig. 2 und

Fig. 5 a und 5b einen Werkstückträger in einer Seitenansicht sowie in einer die Stirnseite zeigenden Ansicht.

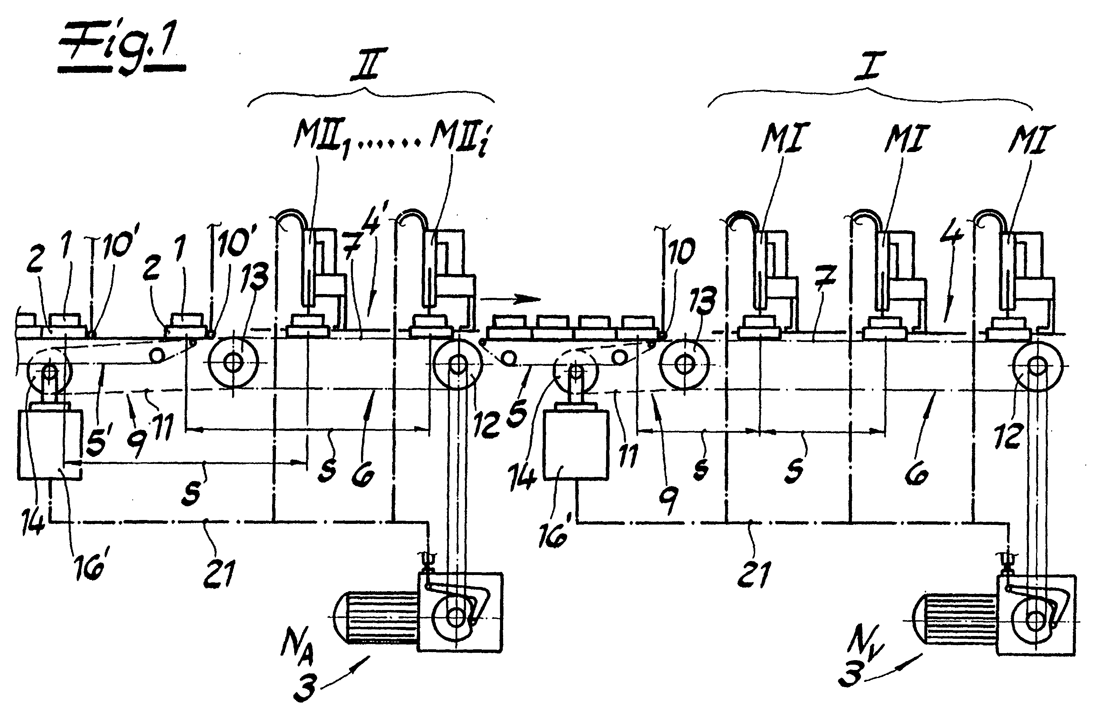

Die Werkstücke 1 sind auf Werkstückträgern 2 aufgesetzt und durchlaufen während ihres Transports durch die Anlage - in der in Fig. 1 dargestellten Durchlaufrichtung von links nach rechts - eine Folge aus mehreren Montage- und/oder Bearbeitungsvorgängen. Eine solche Anlage ist einsetzbar zur Herstellung von Baugruppen aus vorgefertigten Einzelteilen, wobei z. B. Stanzteile, Dichtungen, Schrauben, Bolzen und dergleichen auf einer Trägerplatte, die auf einem Werkstückträger 2 aufsitzt und mit dem Werkstückträger 2 die Anlage durchläuft, positioniert und befestigt werden müssen. Regelmäßig sind schnelle Arbeitsvorgänge, z. B. die Herstellung von Steck- und Nietverbindungen, Stanzvorgänge und dergleichen, und langsamere Arbeitsvorgänge, z. B. die Herstellung von Klebe- und Lötverbindungen, auszuführen.

Die in Fig. 1 dargestellte Anlage besteht aus mindestens zwei in einer Fertigungslinie hintereinander angeordneten Arbeitsstationen I, II mit Montage- und/oder Bearbeitungseinrichtungen MI, MII. Die Arbeitsstationen I, II weisen jeweils einen Antrieb 3 für getaktete, zwangsgesteuerte Bewegungen der einer Arbeitsstation I bzw. II zugeordneten Montage/Bearbeitungseinrichtungen MI, MII und jeweils eine lineare Transfervorrichtung 4 für den schrittweisen, an den Arbeitstakt der Montage/Bearbeitungseinrichtungen angepaßten Transport der Werkstückträger 2 auf. Die Montage/Bearbeitungseinrichtungen MI für schnelle Arbeitsvorgänge sind einer ersten Arbeitsstation I zugeordnet und arbeiten in einem schnellen Vorgabetakt mit hoher Vorgabetaktzahl $N_V$ pro Zeiteinheit. Die Montage/Bearbeitungseinrichtungen MII für langsamere Arbeitsvorgänge sind einer zweiten Arbeitsstation II zugeordnet und arbeiten in einem Arbeitstakt, dessen Arbeitstaktzahl $N_A$ pro Zeiteinheit um ein ganzzahliges Vielfaches i kleiner ist als die Vorgabetaktzahl $N_V$. Es gilt die mathematische Bedingung

$$N_V = i \times N_A$$

$$i = 2,3 \ldots n.$$

In der Arbeitsstation I, in der die schnellen Arbeitsvorgänge zusammengefaßt sind, führen die Montage/Bearbeitungseinrichtungen MI unterschiedliche Arbeitsvorgänge aus. In der Arbeitsstation II hingegen, in der die langsameren Arbeitsvorgänge durchgeführt werden, sind jeweils mehrere Montage/Bearbeitungseinrichtungen $MII_1 \ldots MII_i$ in Längsrichtung der Transfervorrichtung 4 hintereinander angeordnet, mit denen derselbe Arbeitsvorgang, z. B. die Herstellung einer Kleboder Lötverbindung ausgeführt wird. Ihre Anzahl $n_{II}$ entspricht den Quotienten i aus der Vorgabetaktzahl $N_V$ und der Arbeitstaktzahl $N_A$. Arbeiten die Montage/Bearbeitungseinrichtungen MI der ersten Arbeitsstation I z. B. mit 100 Takten pro Minute und wird die Arbeitsstation II für die langsameren Bearbeitungsvorgänge mit 50 Takten pro Minute betrieben, so werden für jeden in der zweiten Arbeitsstation II ausgeführten Arbeitsvorgang zwei Montage/Bearbeitungseinrichtungen $MII_1$, $MII_2$ hintereinander angeordnet.

In der Arbeitsstation I, in der die schnellen Arbeitsvorgänge ausgeführt werden, werden die Werkzeugträger im Arbeitstakt um eine Schrittlänge s, die dem Abstand zwischen zwei aufeinanderfolgenden Montage/Bearbeitungseinrichtungen MI entspricht, weiter bewegt. In der zweiten Arbeitsstation II, die für die langsameren Arbeitsvorgänge vorgesehen ist, ist die Schrittlänge s größer. Die der zweiten Arbeitsstation II zugeordnete Transfervorrichtung erfaßt eine dem Quotient i aus der Vorgabetaktzahl $N_V$ und der Arbeitstaktzahl $N_A$ entsprechende Zahlen $n_{II}$ vorpositionierter Werkstückträger 2 und führt diese in einem Schritt der entsprechenden Anzahl von Montage/Bearbeitungseinrichtungen $MII_1 \ldots + MII_i$ zu, in denen dann gleichzeitig derselbe Arbeitsvorgang an den zugeführten Werkstücken 1 ausführbar ist. In dem in Fig. 1 dargestellten Ausführungsbeispiel werden zwei Werkstückträger in Schritten, die dem doppelten Abstand der aufeinanderfolgenden Montage/Bearbeitungseinrichtungen $MII_1$, $MII_2$ entspricht, im Arbeitstakt der Arbeitsstation II den Montage/Bearbeitungseinrichtungen $MII_1$, $MII_2$ zugeführt. Die Transfervorrichtung 4' der zweiten Arbeitsstation II weist zu diesem Zweck eine Zuführeinrichtung 5' für die Werkstückträger 2 auf, auf der die Werkstückträger 2 mit einem an den Abstand zwischen den Montage/Bearbeitungseinrichtungen angepaßten Zwischenraum vorpositionierbar sind. Im Rahmen der Erfindung liegt es auch, daß die Montage/Bearbeitungseinrichtungen dicht nebeneinander angeordnet sind und die Größe der Werkstückträger so bemessen ist, daß die Werkstückträger 2 ohne Lücke auf der Zuführeinrichtung 5' vorpositionierbar sind. Zwei oder mehrere Werkstückträger, deren Anzahl $n_{II}$ durch das vorstehend erläuterte Kalkül bestimmt ist, sind gleichzeitig von der Transfervorrichtung 4' erfaßbar und mit einem einzigen Schritt s der zugeordneten Anzahl $n_{II}$ Montage/Bearbeitungseinrichtungen $MII_1 \ldots MII_i$ zuführbar.

Die den Arbeitsstationen I, II zugeordneten 4, 4' Transfervorrichtungen weisen jeweils eine Zuführeinrichtung 5, 5' für Werkstückträger 2 und einen intermittierend angetriebenen Riementrieb 6 mit mindestens einem Zahnriemen 7 auf, der außenseitig mit einem an ein bodenseitiges Zahnprofil 8 des Werkstückträgers 2 angepaßtes Kupplungsprofil ausgebildet ist. Ein Kupplungsabschnitt 9 des Riementriebs 6 ist heb- und senkbar angeordnet, wobei der Kupplungsabschnitt 9 bei der Hubbewegung in das bodenseitige Zahnprofil 8 mindestens eines auf der Zuführeinrichtung 5, 5' vorpositionierten Werkstückträgers 2 kuppelnd eingreift. Der Kupplungsabschnitt 9 der zur Arbeitsstation I gehörenden Transfervorrichtung 4 ist so bemessen, daß mit einer Hubbewegung jeweils ein Werkstückträger 2 erfaßbar ist, der an einem Stauelement 10 anliegend auf der Zuführeinrichtung 5 vorpositioniert ist. Die Hubbewegung des Kupplungsabschnittes 9 ist ebenso wie die von den Montage/Bearbeitungseinrichtungen MI ausgeführten Stellbewegungen von einer motorisch angetriebenen Steuerwelle des Antriebs 3 mit aufgesetzten Kurvenscheiben abgeleitet. Der Kupplungsabschnitt 9 der zur zweiten Arbeitsstation II gehörenden Transfervorrichtung 4' ist so bemessen, daß mit einer einzigen Hubbewegung eine dem Quotient i aus der Vorgabetaktzahl $N_V$ und der Arbeitstaktzahl $N_A$ entsprechende Zahl von auf der Zuführeinrichtung 4' vorpositionierten Werkstückträgern 2 erfaßbar sind. Im Ausführungsbeispiel werden zwei, an Stauelementen 10' vorpositionierte Werkstückträger 2 mit einer einzigen Hubbewegung des Kupplungsabschnittes 9 erfaßt. Die Hubbewegung des Kupplungsabschnittes 9 kann ebenso wie die Stellbewegungen der Montage/Bearbeitungseinrichtungen $MII_1$, $MII_2$ zwangsgesteuert sein und wird dann von der Drehbewegung einer Kurvenscheibe des zur Arbeitsstation II gehörenden Antriebes 3 abgeleitet.

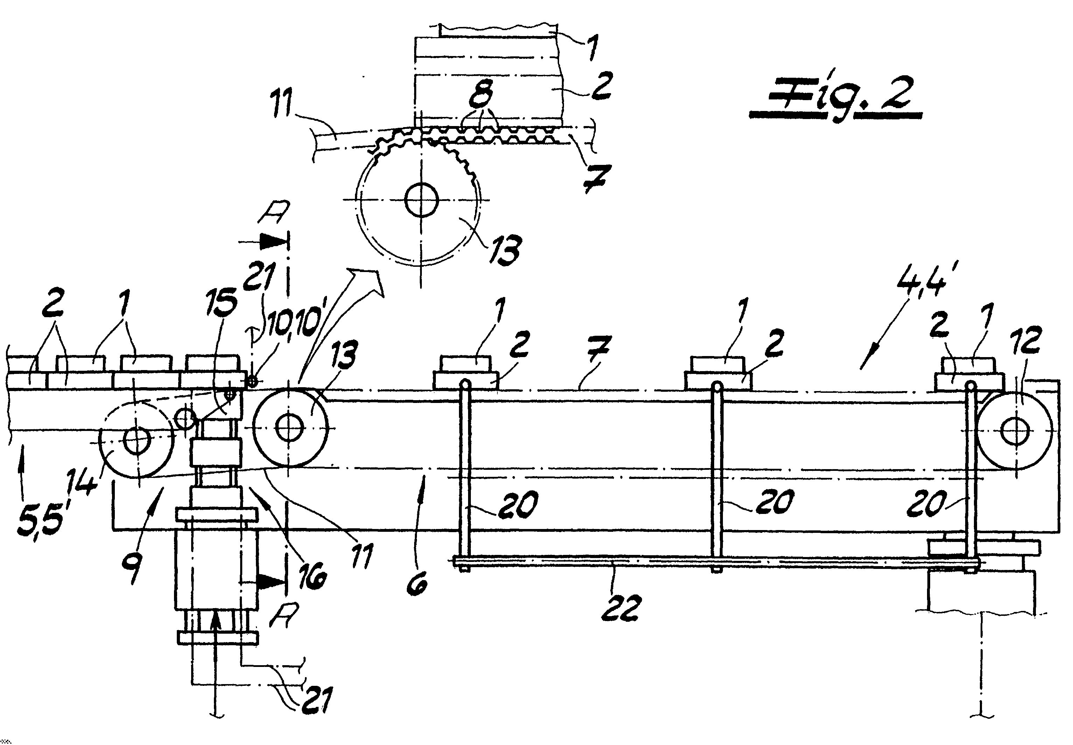

Die weitere konstruktive Ausführung der Transfervorrichtungen 4, 4' wird aus den Figuren 2 bis 4 deutlich. Im Ausführungsbeispiel und nach bevorzugter Ausführungsform der Erfindung weist der Riementrieb 6 der Transfervorrichtungen zwei parallel angeordnete Zahnriemen 7 für die Transportbewegung der Werkstückträger 2 und einen synchron zu diesen bewegbaren Kupplungszahnriemen 11 auf. Die Zahnriemen 7 sind im Obertrum des Riementriebs 6 über eine Gleitfläche des Maschinengestells geführt. Der Kupplungszahnriemen 11 ist zwischen den parallelen Zahnriemen 7 angeordnet und führt eine vertikale Kupplungsbewegung aus. Der Kupplungszahnriemen 11 und die weiteren Zahnriemen 7 sind mechanisch miteinander gekoppelt.

Der Riementrieb 6 weist ein Antriebsrad 12 sowie mindestens zwei Umlenkräder 13, 14 auf. Die parallelen Zahnriemen 7 für den Transport der Werkstückträger 2 sind über das Antriebsrad 12 und gemeinsam mit dem Kupplungszahnriemen 11 über ein Umlenkrad 13 geführt. Der Kupplungszahnriemen 11 ist über die beiden Umlenkräder 13, 14 geführt. Aus der Fig. 2 geht hervor, daß der Kupplungszahnriemen 11 im Obertrum und im Untertrum über einen Schuh 15 geführt ist, der an eine die vertikale Kupplungsbewegung ausführende Stelleinrichtung 16 angeschlossen ist. Im Rahmen der Erfindung liegt es aber auch, daß das den Kupplungszahnriemen 11 umlenkende Rad 14 an eine die vertikale Kupplungsbewegung ausführende Stelleinrichtung 16' angeschlossen ist, wie dies in Fig. 1 angedeutet wurde.

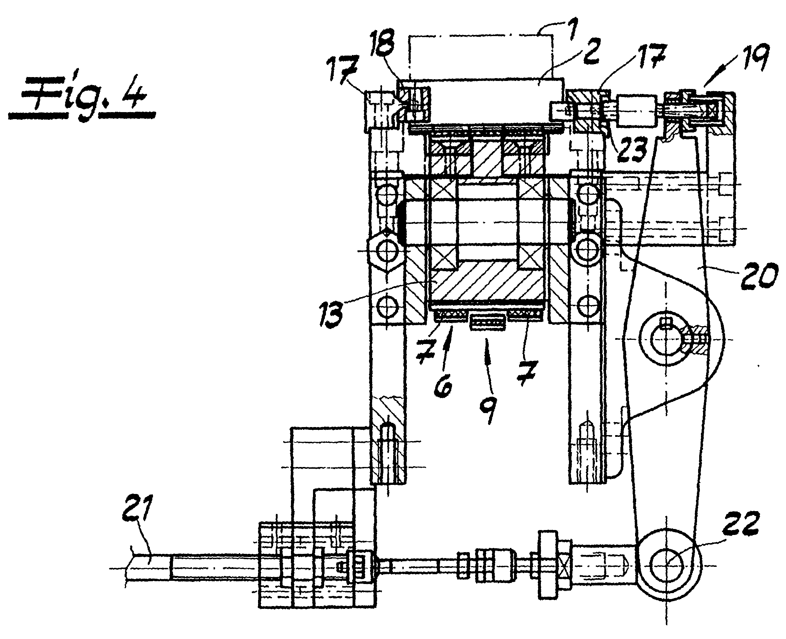

Insbesondere der Fig. 4 entnimmt man, daß die Transfervorrichtungen 4, 4' Führungsleisten 17 aufweisen, an denen die von dem Riementrieb 6 erfaßten Werkstückträger 2 seitlich geführt sind. Eine Führungsleiste 17 ist als Präzisionsanschlag mit einer im Rahmen der Bearbeitungstoleranzen präzise vorgegebenen Zuordnung zu den Montageund Bearbeitungseinrichtungen MI, MII ausgebildet.

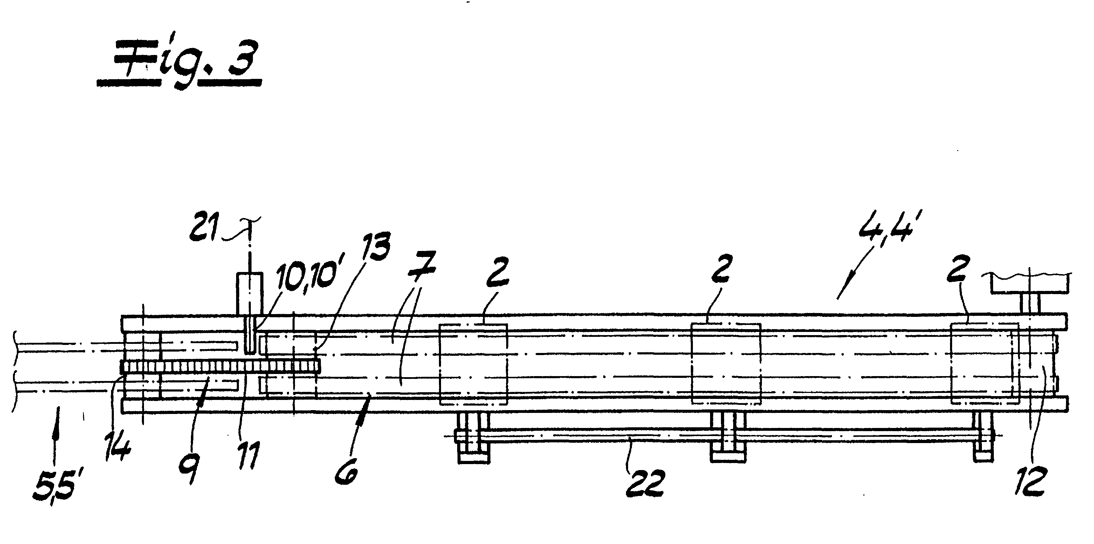

Die Werkstückträger 2 können als Kunststofformteile ausgebildet sein, wobei die dem Präzisionsanschlag zugeordnete Werkstückträgerseite paßgenau mit einer metallischen Leiste 18 ausgerüstet sein kann. Paßgenau meint insbesondere auch, daß die Abmessungen zum aufliegenden Werkstück 1 genau festliegen. Der gegenüberliegenden Seite des Werkstückträgers 2 ist eine Spanneinrichtung 19 mit Spannelement zugeordnet. Die Spanneinrichtung 19 weist einen um eine maschinenfeste Achse drehbaren Schwenkhebel 20 auf, an den ein an den Antrieb 3 angeschlossenes Zug/Druckbetätigungselement 21 angreift. Die jeweils einer Montage/Bearbeitungseinrichtung MI zugeordneten Schwenkhebel 20 sind durch eine Stange 22 miteinander gekoppelt, so daß die Spannbewegungen synchron ausführbar sind (Figuren 3 und 4). Das an den Schwenkhebel 20 angeschlossene Spannelement 23 beaufschlagt den Werkstückträger 2 in der Bearbeitungsposition seitlich und fixiert ihn an dem Präzisionsanschlag. Spannelement 23 und Werkstückträger 2 sind mit zugeordneten Zentrierungsflächen ausgerüstet.

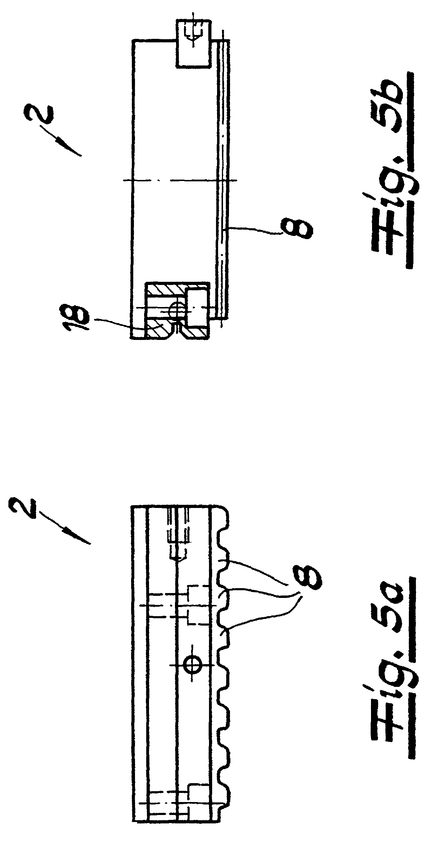

Die Werkstückträger 2 bestehen aus einem Kunststoffkörper mit unterseitig eingeformtem Kupplungsprofil 8 (vgl. Fig. 5a). Die mit dem Präzisionsanschlag zusammenwirkende metallische Leiste 18 ist in den Kunststoffträger eingesetzt. Ferner erhält der Werkstückträger 2 einen metallischen Einsatz mit einer Zentrierungsfläche, die mit dem Spannelement 23 zusammenwirkt.

## Patentansprüche

1. Anlage für die Durchführung einer Folge aus mehreren Montage- und/oder Bearbeitungsvorgängen an Werkstücken, insbesondere Kleinteilen, die auf Werkstückträgern aufgesetzt sind, mit mindestens zwei in einer Fertigungslinie hintereinander angeordneten Arbeitsstationen (I, II) mit Montage- und/oder Bearbeitungseinrichtungen (MI, MII), wobei die Arbeitsstationen (I, II) jeweils einen Antrieb (3) für getaktete, zwangsgesteuerte Bewegungen der einer Arbeitsstation zugeordneten Montage/Bearbeitungseinrichtungen (MI, MII) und jeweils eine lineare Transfervorrichtung (4, 4') für den schrittweisen, an den Arbeitstakt der Montage/Bearbeitungseinrichtungen (MI, MII) angepaßten Transport der Werkstückträger aufweisen,
**dadurch gekennzeichnet,**

daß die Montage/Bearbeitungseinrichtungen (MI) für schnelle Arbeitsvorgänge einer ersten Arbeitsstation (I) zugeordnet sind und in einem schnellen Vorgabetakt mit hoher Vorgabetaktzahl ($N_V$) pro Zeiteinheit arbeiten,

daß die Montage/Bearbeitungseinrichtungen (MII) für langsamere Arbeitsvorgänge einer zweiten Arbeitsstation (II) zugeordnet sind und in einem Arbeitstakt arbeiten, dessen Arbeitstaktzahl ($N_A$) pro Zeiteinheit um ein ganzzahliges Vielfaches (i) kleiner ist als die Vorgabetaktzahl ($N_V$),

**daß** in der zweiten Arbeitsstation (II) für dieselben Arbeitsvorgänge jeweils mehrere Montage/Bearbeitungseinrichtungen ($MII_1$...$MII_i$) in Längsrichtung der Transfervorrichtung (4') hintereinander angeordnet sind, deren Anzahl ($n_{II}$) dem Quotienten (i) aus der Vorgabetaktzahl ($N_V$) und der Arbeitstaktzahl ($N_A$) für die in der zweiten Arbeitsstation (II) ausgeführten langsameren Arbeitsvorgänge entspricht, und

**daß** die der zweiten Arbeitsstation (II) zugeordnete Transfervorrichtung (4') eine dem Quotient (i) aus der Vorgabetaktzahl ($N_V$) und der Arbeitstaktzahl ($N_A$) entsprechende Zahl vorpositionierter Werkstückträger (2) erfaßt und der entsprechenden Anzahl ($n_{II}$) von Montage/Bearbeitungseinrichtungen ($MII_1$...$MII_i$) zuführt, mit denen gleichzeitig derselbe Arbeitsvorgang an den zugeführten Werkstücken 1 ausführbar ist.

2. Anlage nach Anspruch 1, **dadurch gekennzeichnet, daß** die Transfervorrichtung (4') der zweiten Arbeitsstation (II) eine Zuführeinrichtung (5') für Werkstückträger (2) aufweist, auf der die Werkstückträger (2) mit einem an den Abstand zwischen den Montage/Bearbeitungseinrichtungen angepaßten Zwischenraum vorpositionierbar sind, wobei mehrere Werkstückträger (2) gleichzeitig von der Transfervorrichtung (4') erfaßbar und mit einem einzigen Schritt (s) einer zugeordneten Anzahl ($n_{II}$) von Montage/Bearbeitungseinrichtungen ($MII_1$...$MII_i$) zuführbar sind.

3. Anlage nach Anspruch 1 oder 2, **dadurch gekennzeichnet, daß** die den Arbeitsstationen zugeordneten Transfervorrichtungen (4, 4') jeweils eine Zuführeinrichtung (5, 5') für Werkstückträger (2) und einen intermittierend angetriebenen Riementrieb (6) mit mindestens einem Zahnriemen (7) aufweisen, der außenseitig mit einem an ein bodenseitiges Zahnprofil (8) des Werkstückträgers (2) angepaßtes Kupplungsprofil ausgebildet ist, daß ein Kupplungsabschnitt (9) des Riementriebs (6) heb- und senkbar angeordnet ist, wobei der Kupplungsabschnitt (9) bei der Hubbewegung in das bodenseitige Profil (8) mindestens eines auf der Zuführeinrichtung (5, 5') vorpositionierten Werkstückträgers (2) kuppelnd eingreift.

4. Anlage nach Anspruch 3, **dadurch gekennzeichnet, daß** der Kupplungsabschnitt (9) der zur zweiten Arbeitsstation (II) gehörenden Transfervorrichtung (4') so bemessen ist, daß mit einer einzigen Hubbewegung eine dem Quotient (i) aus der Vorgabetaktzahl ($N_V$) und der Arbeitstaktzahl ($N_A$) entsprechende Zahl von auf der Zuführeinrichtung (5') vorpositionierten Werkstückträger (2) erfaßbar sind.

5. Anlage nach Anspruch 3 oder 4, **dadurch gekennzeichnet, daß** die Transfervorrichtungen (4, 4') Führungsleisten (17) aufweisen, an denen die von dem Riementrieb (6) erfaßten Werkstückträger (2) seitlich geführt sind, wobei eine Führungsleiste als Präzisionsanschlag mit einer im Rahmen der Bearbeitungstoleranzen präzise vorgegebenen Zuordnung zur Montage- und Bearbeitungseinrichtung (MI, MII) ausgebildet ist, und daß die Transfervorrichtungen (4, 4') jeweils eine Spanneinrichtung (19) mit Spannelement (23) aufweist,- welches die Werkstückträger (2) in der Arbeitsposition seitlich beaufschlagt und an dem Präzisionsanschlag fixiert.

6. Anlage nach einem der Ansprüche 3 bis 5, **dadurch gekennzeichnet, daß** der Riementrieb (6) der Transfervorrichtungen (4, 4') zwei parallel angeordnete Zahnriemen (7) für die Transportbewegung der Werkstückträger (2) und einen synchron zu diesem bewegbaren Kupplungszahnriemen (11) aufweist, wobei der Kupplungszahnriemen (11) zwischen den parallelen Zahnriemen (7) angeordnet ist und eine vertikale Kupplungsbewegung ausführt.

7. Anlage nach Anspruch 6, **dadurch gekennzeichnet, daß** der Riementrieb (6) ein Antriebsrad (12) sowie mindestens zwei Umlenkräder (13, 14) aufweist, wobei die parallelen Zahnriemen (7) für den Transport der Werkstückträger (2) über das Antriebsrad (12) und gemeinsam mit dem Kupplungszahnriemen (11) über ein Umlenkrad (13) geführt sind und wobei der Kupplungszahnriemen (11) über die beiden Umlenkräder (13, 14) geführt ist.

8. Anlage nach Anspruch 7, dadurch kennzeichnet, daß der Kupplungszahnriemen (11) im Obertrum und im Untertrum des Riementriebs (6) über einen Schuh (15) geführt ist, der an eine die vertikale Kupplungsbewegung ausführende Stelleinrichtung (16) angeschlossen ist.

9. Anlage nach Anspruch 7, **dadurch gekennzeichnet, daß** das den Kupplungszahnriemen (11) umlenkende Rad (14) an eine die vertikale Kupplungsbewegung ausführende Stelleinrichtung (16') angeschlossen ist.

## Claims

1. An installation for carrying out a sequence comprising a plurality of assembling and/or processing operations on workpieces, particularly small pieces, which are placed on workpiece supports, comprising at least two workstations (1, II) which are disposed in succession on a production line and which comprise assembling and/or processing devices (MI, MII), wherein the workstations (I, II) each comprise at least one drive (3) for periodic, forcibly controlled movements of the assembling/processing devices (MI, MII) associated with one workstation, and each comprise a linear transfer apparatus (4, 4') for the stepwise transport of the workpiece supports, which transport is matched to the operating cycle of the assembling/processing devices (MI, MII),

   **characterised in that**

   the assembling/processing devices (MI) for rapid operations are associated with a first workstation (1), and operate at a rapid standard cycle with a large number of standard cycles ($N_V$) per unit time,

   that the assembling/processing devices (MII) for slower operations are associated with a second workstation (II) and operate at a working cycle, the number of working cycles ($N_A$) of which per unit time is smaller by an integral multiple (i) than the number of standard cycles ($N_V$),

   that in the second workstation (II) there is a plurality of assembling/processing devices ($MII_1...MII_i$) for the same operations which are each disposed in succession in the longitudinal direction of the transfer apparatus (4'), the number ($n_{II}$) of which devices corresponds to the ratio (i) of the number of standard cycles ($N_V$) to the number of working cycles ($N_A$) for the slower operations which are performed in the second workstation (II), and

   that the transfer apparatus (4') associated with the second workstation (II) grasps a number of pre-positioned workpiece supports (2) corresponding to the ratio (i) of the number of standard cycles ($N_V$) to the number of working cycles ($N_A$) and feeds them to the corrcsporiding number ($n_{II}$) of assembling/processing devices ($MII_1...MII_i$) with which the same operation can be carried out simultaneously on the workpieces 1 which are fed.

2. An installation according to claim 1, **characterised in that** the transfer apparatus (4') of the second workstation (II) comprises a feeder device (5) for workpiece supports (2), on which the workpiece supports (2) can be pre-positioned at a spacing which is matched to the distance between the assembling/processing devices, wherein a plurality of workpiece supports (2) can be grasped simultaneously by the transfer apparatus (4') and can be fed in a single step (s) to an associated number ($n_{II}$) of assembling/processing devices ($MII_1...MII_i$).

3. An installation according to claim 1 or 2, **characterised in that** the transfer apparatuses (4,4') associated with the workstations each comprise a feeder device (5, 5') for workpiece supports (2) and an intermittently driven belt drive (6) comprising at least one toothed belt (7) which is formed with a coupling profile on its outside which is matched to a toothed profile (8) on the underside of the workpiece support (2), that a coupling section (9) of the belt drive (6) is disposed so that it can be raised and lowered, wherein during the raising movement the coupling section (9) fits into and is coupled to the profile (8) on the underside of at least one workpiece support (2) which is pre-positioned on the feeder device (5, 5').

4. An installation according to claim 3, **characterised in that** the coupling section (9) of the transfer apparatus (4') which belongs to the second workstation (II) is designed so that a number of workpiece supports (2) which are pre-positioned on the feeder device (5'), which number corresponds to the ratio (i) of the number of standard cycles ($N_v$) to the number of working cycles ($N_A$), can be grasped in a single raising movement.

5. An installation according to claim 3 or 4, **characterised in that** the transfer apparatuses (4, 4') comprises guide rails (17) on which the workpiece supports (2) which are grasped by the belt drive (6) are laterally guided. wherein one guide rail is formed as a precision stop and has a predetermined association. which is precise within the scope of the processing tolerances, with the assembling and processing device (MI, MII), and that the transfer apparatuses (4, 4') each comprise a clamping device (19) with a clamping element (23) which in the working position acts laterally on the workpiece supports (2) and fixes them to the precision stop.

6. An installation according to any one of claims 3 to 5, **characterised in that** the belt drive (6) of the transfer apparatuses (4, 4') comprises two parallel toothed belts (7) for the transport movement of the workpiece supports (2) and a coupling toothed belt (11) which can be moved synchronously therewith, wherein the coupling toothed belt (11) is disposed between the parallel toothed belts (7) and executes a vertical coupling movement.

**7.** An installation according to claim 6, **characterised in that** the belt drive (6) comprises a drive wheel (12) and at least two deflection wheels (13, 14), wherein the parallel toothed belts (7) for the transport of the workpiece supports (2) are passed over the drive wheel (12) and are passed, together with the coupling belt drive (11), over a deflection wheel (13), and wherein the coupling toothed belt (11) is passed over the two deflection wheels (13, 14).

**8.** An installation according to claim 7, **characterised in that** in the upper run and lower run of the belt drive (6 ) the coupling toothed belt (11) is guided over a shoe (15) which is attached to an actuating device (16) which executes the vertical coupling movement.

**9.** An installation according to claim 7, **characterised in that** the wheel (14) which deflects the coupling toothed belt (11) is attached to an actuating device (16') which executes the vertical coupling movement.

### Revendications

**1.** Installation pour réaliser une succession de plusieurs opérations de montage et/ou d'usinage sur des pièces d'oeuvre, en particulier des petites pièces, qui sont placées sur des porte-pièces, comportant au moins deux postes de travail (I, II) disposés l'un derrière l'autre dans une ligne de fabrication avec des dispositifs de montage et/ou d'usinage (MI, MII), les postes de travail (I, II) comportant chacun un dispositif d'entraînement (3) pour des mouvements cadencés et commandés positivement des dispositifs de montage/usinage (MI, MII) associés à un poste de travail, ainsi que chacun un dispositif de transfert linéaire (4, 4') pour le transport pas à pas, adapté à la cadence de travail des dispositifs de montage/usinage (MI, MII), des porte-pièces,
**caractérisée**

en ce que pour des opérations de travail rapides, les dispositifs de montage/usinage (MI) sont associés à un premier poste de travail (I) et travaillent à une cadence imposée rapide avec un nombre de cadences imposé élevé ($N_V$) par unité de temps,

en ce que pour des opérations de travail plus lentes, les dispositifs de montage/usinage (MII) sont associés à un deuxième poste de travail (II) et travaillent à une cadence de travail dont le nombre de cadences de travail ($N_A$) par unité de temps est inférieur d'un multiple entier (i) au nombre de cadences imposé ($N_V$),

en ce que dans le deuxième poste de travail (II), pour les mêmes opérations de travail, plusieurs dispositifs de montage/usinage ($MII_1$... $MII_i$) sont disposés l'un derrière l'autre dans la direction longitudinale du dispositif de transfert (4'), dont le nombre ($n_{II}$) correspond au quotient (i) du nombre de cadences imposé (Nv) et du nombre de cadences de travail ($N_A$) pour les opérations de travail plus lentes exécutées dans le deuxième poste de travail (II), et

en ce que le dispositif de transfert (4') affecté au deuxième poste de travail (II) saisit un nombre, correspondant au quotient (i) du nombre de cadences imposé ($N_V$) et du nombre de cadences de travail ($N_A$), de porte-pièces (2) prépositionnés, et les amène au nombre correspondant ($n_{II}$) de dispositifs de montage/usinage ($MII_1$... $MII_i$) au moyen desquels la même opération de travail peut être exécutée simultanément sur les pièces (1) amenées.

**2.** Installation selon la revendication 1, **caractérisée en ce que** le dispositif de transfert (4') du deuxième poste de travail (II) comporte un dispositif d'amenée (5') pour des porte-pièces (2), sur lequel les porte-pièces (2) peuvent être prépositionnés avec un espace intermédiaire adapté à la distance entre les dispositifs de montage/usinage, plusieurs porte-pièces (2) pouvant être saisis simultanément par le dispositif de transfert (4') et pouvant être amenés, par un seul pas (s), à un nombre ($n_{II}$) associé de dispositifs de montage/usinage ($MII_{1...}$, $MII_i$).

**3.** Installation selon la revendication 1 ou 2, **caractérisée en ce que** les dispositifs de transfert (4, 4') associés au poste de travail comportent chacun un dispositif d'amenée (5, 5') pour des porte-pièces (2) et un mécanisme à courroie (6) entraîné de manière intermittente avec au moins une courroie crantée (7) qui présente, sur son côté extérieur, un profil d'accouplement adapté à un profil denté (8) côté fond du porte-pièce (2), **en ce qu'**une portion d'accouplement (9) du mécanisme à courroie (6) est disposée de manière à pouvoir être relevée et abaissée, la portion d'accouplement (9) s'engageant avec accouplement lors du mouvement de levage dans le profil (8) côté fond d'au moins un porte-pièce (2) prépositionné sur le dispositif d'amenée (5, 5').

**4.** Installation selon la revendication 3, **caractérisée en ce que** la portion d'accouplement (9) du dispositif de transfert (4'), faisant partie du deuxième poste de travail (II), a des dimensions telles que par un seul mouvement de levage, un nombre, correspondant au quotient (i) du nombre de cadences imposé ($N_V$) et du nombre de cadences de travail ($N_A$), de porte-pièces (2) prépositionnés sur le dispositif d'amenée (5'), peut-être saisi.

5. Installation selon la revendication 3 ou 4, **caractérisée en ce que** les dispositifs de transfert (4, 4') comportent des baguettes de guidage (17) sur lesquelles les porte-pièces (2), saisis par le mécanisme à courroie (6), sont guidés latéralement, une baguette de guidage étant réalisée en tant que butée de précision avec une relation prédéfinie précise dans le cadre des tolérances d'usinage, par rapport au dispositif de montage et d'usinage (MI, MII), et **en ce que** les dispositifs de transfert (4, 4') comportent chacun un dispositif de serrage (19) avec élément de serrage, lequel agit latéralement sur les porte-pièces (2) dans la position de travail et les fixe sur la butée de précision.

6. Installation selon l'une des revendications 3 à 5, **caractérisée en ce que** le mécanisme à courroie (6) des dispositifs de transfert (4, 4') comporte deux courroies crantées (7) disposées parallèlement pour le mouvement de transport des porte-pièces (2) ainsi qu'une courroie crantée d'accouplement (11) déplaçable de manière synchrone par rapport à celui-ci, la courroie crantée d'accouplement (11) étant disposée entre les courroies crantées (7) parallèles et exécutant un mouvement d'accouplement vertical.

7. Installation selon la revendication 6, **caractérisée en ce que** le mécanisme à courroie (6) comporte une roue d'entraînement (12) ainsi qu'au moins deux roues de renvoi (13, 14), les courroies crantées (7) parallèles étant guidées, pour le transport des porte-pièces (2), sur la roue d'entraînement (12) et, avec la courroie crantée d'accouplement (11) sur une roue de renvoi (13), et la courroie crantée d'accouplement (11) étant guidée sur les deux roues de renvoi (13, 14).

8. Installation selon la revendication 7, **caractérisée en ce que** la courroie crantée d'accouplement (11) est guidée dans le brin supérieur et dans le brin inférieur du mécanisme à courroie (6) par un sabot (15) qui est raccordé à un dispositif de réglage (16) exécutant le mouvement d'accouplement vertical.

9. Installation selon la revendication 7, **caractérisée en ce que** la roue (14) déviant 1a courroie d'accouplement (11) est raccordée à un dispositif de réglage (16') exécutant le mouvement d'accouplement vertical.

*Fig.1*

II

$MII_1 \ldots \ldots MII_i$

I

MI   MI   MI

EP 0 965 413 B1

Fig.2

Fig. 3

_Fig.4_

EP 0 965 413 B1

Fig. 5b

Fig. 5a